# EUROPEAN PATENT APPLICATION

(11) **EP 4 517 703 A1**
(43) Date of publication of application: **05.03.2025**
(21) Application number: 23829770.9
(22) Date of filing: 16.05.2023
(51) Int. Cl.: G07C 1/20

(54) **ELECTRONIC PATROL METHOD, APPARATUS, AND DEVICE**

(30) Priority: 29.06.2022 CN 202210761023
(71) Applicant: Hangzhou Hikvision Digital Technology Co., Ltd., Hangzhou, Zhejiang 310051 (CN)
(72) Inventor: SHAO, Youbang, Hangzhou, Zhejiang 310051 (CN); XIONG, Hui, Hangzhou, Zhejiang 310051 (CN)
(74) Representative: Vogelbruch, Keang
(86) International application number: PCT/CN2023/094533
(87) International publication number: WO 2024/001584

(57) **Abstract**

An electronic patrol method, apparatus, and device. The method comprises: determining whether a target user has an effective operation for a target video (101); if yes, determining that the target user has completed an electronic patrol task for the target video (102); and if not, determining that the target user has not completed the electronic patrol task for the target video (103). The method can prompt a target user to view the content of a target video, to ensure that the target user views the video content, so that when an abnormal event occurs, the target user can timely discover the abnormal event, and the abnormal event can be timely handled.

## Description

### CROSS-REFERENCES TO RELATED APPLICATIONS

The present application claims priority to Chinese patent application No. 202210761023.9, filed on June 29, 2022, which is hereby incorporated by reference in its entirety.

### TECHNICAL FIELD

The present disclosure relates to the technical field of security, and in particular, to an electronic patrol method and apparatus, and a device.

### BACKGROUND

With development of economy and increasing investment in parks, a number of parks is increasing, and an occupied area of parks is increasing. A park is a uniformly planned area, and an enterprise of a specific industry or form is specially arranged in the area, so as to perform unified management, for example, an industrial park (mainly for industrial enterprises), a free trade park (mainly for trading enterprises), a manufacturing park, a logistics park, a scientific and technological park, and an agricultural park.

Property management of the park requires personnel entries and exits management, facility status inspection of the park, emergency handling of the park, and the like. In order to implement property management in the park, patrol by a target user (i.e., a staff, also referred to as an inspecting staff, a guard tour staff, etc.) is an indispensable part of property management. For example, the target user can go on-site to patrol and inspect key sites, so as to find out emergent events in the park, and check the facility status in the park. Alternatively, the target user may perform an electronic patrol task within a specified time, that is, watch a target video, so as to find out emergent events in the park in time and check the facility status in the park.

When the target user carries out the electronic patrol task within the specified time, after opening the target video, the target user may not check the content of the target video, thus when an abnormal event occurs, the target user cannot find out the abnormal event in time, the abnormal event cannot be handled in time, and the abnormal event is missed.

### SUMMARY

The present disclosure provides an electronic patrol method, so as to improve valid completion rate of an electronic patrol task. The method includes: determining whether a target user performs a valid operation on a target video; in response to determining that the target user performs the valid operation on the target video, determining that the target user completes an electronic patrol task on the target video; in response to determining that the target user does not perform the valid operation on the target video, determining that the target user does not complete the electronic patrol task on the target video.

The present disclosure provides an electronic patrol apparatus, including: a processing module, configured to determine whether a target user performs a valid operation on a target video; a determining module, configured to determine that the target user completes an electronic patrol task on the target video in response to determining that the target user performs a valid operation on the target video; determine that the target user does not complete the electronic patrol task on the target video in response to determining that the target user does not perform the valid operation on the target video.

The present disclosure provides an electronic patrol device, including: a processor and a machine-readable storage medium, where the machine-readable storage medium stores a machine-executable instruction executable by the processor; the processor is configured to execute the machine-executable instruction to implement the electronic patrol method according to the above embodiments.

The present disclosure provides a machine-readable storage medium storing a machine-executable instruction executable by a processor, where the processor is configured to execute the machine-executable instruction to implement the electronic patrol method according to the above embodiments.

The present disclosure provides a computer program, stored in a machine-readable storage medium, when the computer program is executed by a processor, the processor is caused to implement the above electronic patrol method.

It can be seen from the above technical solution that, in the embodiments of the present disclosure, when the target user carries out the electronic patrol task within a specified time, after the target user opens the target video, a client may determine whether the target user performs a valid operation on the target video, and if so, it may be determined that the target user has completed the electronic patrol task on the target video, and if not, it may be determined that the target user has not completed the electronic patrol task on the target video. Apparently, by determining whether the target user performs a valid operation on the target video, the target user can be motivated to watch the content of the target video, that is, the target user is ensured to watch the video content, and a valid completion rate of the electronic patrol task is improved, so that when an abnormal event occurs, the target user can find out the abnormal event in time, and the abnormal event can be handled in time.

### BRIEF DESCRIPTION OF DRAWINGS

In order to describe the technical solutions in the embodiments of the present disclosure more clearly, the following briefly describes the accompanying drawings that need to be used in the description of the embodiments of the present disclosure, and obviously, the accompanying drawings in the following description are merely some embodiments described in the present disclosure, and for a person of ordinary skill in the art, other accompanying drawings may be obtained according to these accompanying drawings in the embodiments of the present disclosure.
FIG. 1 is a schematic flowchart of an electronic patrol method according to an implementation of the present disclosure.
FIG. 2A to FIG. 2C are schematic diagrams of special shapes in an embodiment of the present disclosure.
FIG. 2D to FIG. 2E are schematic diagrams of a progress bar in an embodiment of the present disclosure.
FIG. 2F is a schematic diagram of division of a progress bar in an embodiment of the present disclosure.
FIG. 2G to FIG. 2H are schematic diagrams of a displayed operation duration in an embodiment of the present disclosure.
FIG. 3 is a schematic flowchart of an electronic patrol method according to an implementation of the present disclosure.
FIG. 4 is a schematic structural diagram of an electronic patrol apparatus according to an implementation of the present disclosure.
FIG. 5 is a hardware structural diagram of an electronic patrol device according to an implementation of the present disclosure.

### DETAILED DESCRIPTION

The terminology used in the embodiments of the present disclosure is merely for the purpose of describing specific embodiments, and is not intended to limit the present disclosure. As used in the present disclosure and the claims, singular forms "a", "an", and "the" are also intended to include plural forms unless the context clearly indicates other meanings. It should also be understood that the term "and/or" as used herein refers to any or all possible combinations containing one or more associated listed items.

It should be understood that although the terms "first", "second", "third", etc. may be used to describe various information in the embodiments of the present disclosure, these information should not be limited to these terms. These terms are only used to distinguish a same type of information from each other. For example, without departing from the scope of the present disclosure, "first information" may also be referred to as "second information", and similarly, "second information" may also be referred to as "first information". Depending on the context, moreover, the word "if" used may be interpreted as "when" or "upon" or "in response to determining".

Electronic patrol is an important way to timely find abnormal events, and a target user can perform an electronic patrol task within a specified time, that is, watch content in a target video, thereby timely finding out abnormal events. However, when the target user carries out the electronic patrol task within the specified time, after opening the target video, the target user may not check the content of the target video, thus when an abnormal event occurs, the target user cannot find out the abnormal event in time, the abnormal event cannot be handled in time, and the abnormal event is missed.

In view of the above discovery, an electronic patrol method is provided in an embodiment of the present disclosure, by detecting whether a target user performs a valid operation on a target video, it is determined whether the target user has completed an electronic patrol task on the target video, the target user is motivated to perform the valid operation on the target video, and then the target user is motivated to watch content of the target video. For example, it is taken as an example that the valid operation is a valid pressing operation, while other valid operations are similar in implementation, after the target user opens the target video, the target user needs to perform the valid pressing operation on the target video, for example, press the target video by using a mouse at a specified position for a certain duration (duration is configurable), and when an operation duration of the target user is greater than or equal to a preset duration, it is determined that the target user performs the valid pressing operation on the target video and watches the content of the target video.

Obviously, since the target user is motivated to watch the content of the target video, a valid completion rate of the electronic patrol task is improved, and when an abnormal event occurs, the target user can find out the abnormal event in time, so that the abnormal event can be handled in time.

The technical solutions of the embodiments of the present disclosure are described below with reference to specific embodiments.

Embodiments of the present disclosure provide an electronic patrol method, which can be performed by a client, for example, a plurality of cameras can be deployed in a target scene, the cameras can collect a video file of the target scene and send the video file to a back-end device (such as a storage device and a server), the back-end device may include the client, and the client executes the electronic patrol method of the embodiment of the present disclosure.

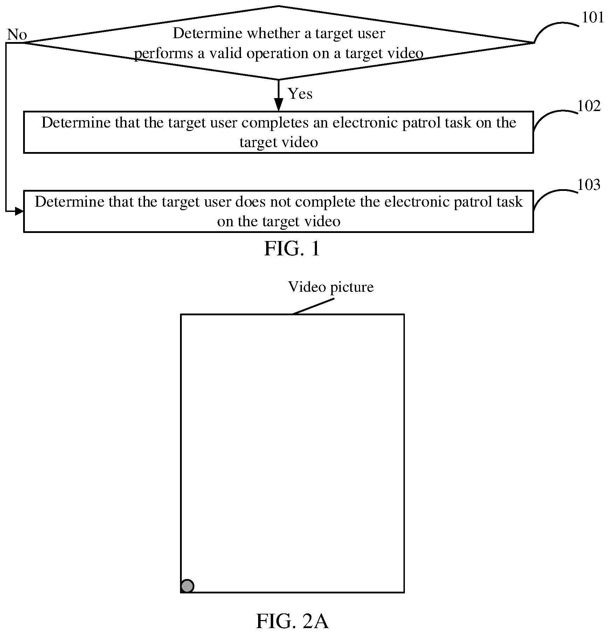

FIG. 1 is a schematic flowchart of an electronic patrol method, and the method may include step 101 to step 103.

Step 101: determining whether a target user performs a valid operation on a target video,
if so, step 102 can be performed; if not, step 103 can be performed.

Step 102: determining that the target user completes an electronic patrol task on the target video.

Step 103: determining that the target user does not complete the electronic patrol task on the target video.

For example, when an electronic patrol task needs to be carried out, an electronic patrol plan may be pre-configured, where the electronic patrol plan is used to indicate on which video file the electronic patrol needs to be performed, the video file is referred to as a target video, and the target video may be an online real-time video or an offline downloaded video.

For example, when the target video is the online real-time video, assuming that the electronic patrol plan is used to indicate to perform the electronic patrol on a video file collected by a camera A, the electronic patrol plan may include information about the camera A (for example, an IP address or a unique device identifier of the camera A). Based on the electronic patrol plan, the client determines that electronic patrol needs to be performed on the video file (that is, a video stream) collected by the camera A, and therefore determines the video file collected by the camera A as the target video. Since the camera A collects the video file in real time and sends the video file to the backend device, the client may acquire, from the backend device, the video file collected by the camera A in real time, take the video file as the target video, and perform electronic patrol on the target video.

Apparently, for the video file collected by the camera A in real time, the video file includes a live picture, and therefore, the live picture of an actual scene can be obtained by performing electronic patrol on the target video.

For another example, when the target video is an offline downloaded video, assuming that the electronic patrol plan is used to indicate to perform the electronic patrol on a video file *a* collected by the camera A (the camera A may collect a large quantity of video files, the video files correspond to different collection times, and the video file *a* is a downloaded video instead of an online real-time video), the electronic patrol plan may include information about the camera A (such as an IP address or a unique device identifier of the camera A) and information about the video file *a* (such as a unique identifier of the video file a and a collection time of the video file a), and based on the electronic patrol plan, the client determines that the electronic patrol needs to be performed on the video file *a* collected by the camera A, and therefore, the video file a collected by the camera A is determined as the target video. After the camera A collects the video file, the camera A sends the video file to the backend device, and the backend device stores the video file, therefore the client may acquire, from the backend device, the video file *a* collected by the camera A, take the video file *a* as the target video, and perform electronic patrol on the target video.

Apparently, for the video file *a* collected by the camera A, the video file *a* includes a historical picture, and therefore, the historical picture of an actual scene can be obtained by performing electronic patrol on the target video.

For example, the target user is a staff, or may be referred to as an inspecting staff, a guard tour staff, or the like, and the target user may log in to the client, for example, log in to the client through authentication information such as a user identification and a password, or log into the client through face authentication information, or log in to the client through token authentication information, or log in to the client through verification code authentication information, or log in to the client through other authentication information, which is not limited herein.

After the target user logs in to the client, the target user may check the electronic patrol plan from the client, and determine, based on the electronic patrol plan, on which video file to perform the electronic patrol. Therefore, the target user opens the video file through the client, takes the video file as the target video, and performs electronic patrol on the target video. Alternatively, after the target user logs in to the client, the client may determine, based on the electronic patrol plan, on which video file to perform electronic patrol, and therefore, the client intentionally opens the video file, so that the video file is used as the target video, so as to perform electronic patrol on the target video.

For example, when the target video is opened and electronic patrol is performed on the target video, the client may further obtain operation information of the target user on the target video, and determine, based on the operation information, whether the target user performs a valid operation on the target video. For example, if the operation information matches configured valid operation data, it is determined that the target user performs a valid operation on the target video; if the operation information does not match the configured valid operation data, it is determined that the target user does not perform the valid operation on the target video. If the target user performs a valid operation on the target video, the client may determine that the target user completes the electronic patrol task on the target video, that is, the target user watches the content of the target video. If the target user does not perform a valid operation on the target video, the client may determine that the target user does not complete the electronic patrol task on the target video, that is, the target user does not watch the content of the target video.

A type of the valid operation may be configured according to experience, and the type of the valid operation is not limited. For example, it is taken as the valid operation that a mouse keeps moving for a period of time, the configured valid operation data may be a duration threshold that the mouse keeps moving, and therefore, the operation information may be a duration that the mouse keeps moving; if the duration is greater than the duration threshold, it is determined that the target user performs the valid operation on the target video; otherwise, it is determined that the target user does not perform the valid operation on the target video.

For another example, it is taken as the valid operation that eyes gaze at a certain position for a period of time, the configured valid operation data may be a gazed-at position A in the target video and a gazing duration threshold, therefore, the operation information may be a duration that the eyes gaze at a certain position A, and if the duration is greater than the gazing duration threshold, it is determined that the target user performs the valid operation on the target video; otherwise, it is determined that the target user does not perform the valid operation on the target video.

For another example, pressing on a certain position in the target video for a certain duration is taken as the valid operation, the configured valid operation data may be a pressed-on position B in the target video and a pressing duration threshold, at this time, the valid operation is also referred to as a valid pressing operation, the operation information may include an operation position (in a case of valid pressing operation, the operation position may also be referred to as a pressing position) and an operation duration (in a case of valid pressing operation, the operation duration may also be referred to as a pressing duration), if the operation duration of the pressing operation on the operation position B in the target video is greater than the duration threshold, it is determined that the target user performs the valid operation on the target video; otherwise, it is determined that the target user does not perform the valid operation on the target video.

Certainly, the above is only a few examples of the valid operation, the valid operation is not limited in this embodiment, and for ease of description, in subsequent embodiments, the pressing operation is taken as an example of the valid operation (the pressing operation may include mouse-click pressing or touch pressing), and other valid operation processing manners are similar to those of the pressing operation, which will not be described in this embodiment.

For example, when the target video is opened and the electronic patrol is performed on the target video, the client may further acquire operation information of the target user on the target video, and determine, based on the operation information, whether the target user performs the valid operation on the target video. If yes, the client may determine that the target user has completed the electronic patrol task on the target video, that is, the target user has watched the content of the target video. If not, the client may determine that the target user does not complete the electronic patrol task on the target video, that is, the target user does not watch the content of the target video.

The operation information may include, but is not limited to, an operation position and/or an operation duration, and certainly, the operation position and the operation duration are merely two examples, and the operation information is not limited in the present disclosure.

When the target user watches the content of the target video, the target user may click a position in the target video by using a mouse, and the position is referred to as an operation position of the target user, that is, an operation position of the mouse.

When the target user clicks a certain position (i.e., the operation position) in the video picture by using the mouse, a click duration of this position is referred to as the operation duration of the target user, that is, the duration of the mouse operation.

In a possible implementation, following manners may be used to determine whether the target user performs a valid operation on the target video. Certainly, following manners are only examples, which is not limited herein.

Manner 1: if the operation information includes an operation position, when the operation position of the target user in the target video matches a target position, it may be determined that the target user performs the valid operation on the target video; or when the operation position does not match the target position, it may be determined that the target user does not perform the valid operation on the target video.

In a possible implementation, the target position may be a default position (for example, a default area with a size of M * N, where both M and N are positive integers) in the target video, the default position is a pre-configured position, and the default position does not change. For example, the default position may be an upper left corner position of the target video, or an upper right corner position of the target video, or a lower left corner position of the target video, or a lower right corner position of the target video, or a center position of the target video, or a lower midpoint position of the target video, or a right midpoint position of the target video, etc. Certainly, the above are merely examples, which is not limited herein.

Assuming that the default position is the lower-left corner position of the target video, the lower-left corner position of the target video is configured as the default position, and the target user can learn that the lower-left corner position is the default position, so that the target user can click the lower-left corner position in the video picture through the mouse when the electronic patrol is performed.

On this basis, when the target user clicks a certain position in the video picture through the mouse, the client may determine the operation position of the target user, and determine whether the operation position matches the target position. Certainly, if the target position is the lower left corner position of the target video, and the operation position of the target user in the target video is the lower left corner position of the target video, it is determined that the operation position matches the target position, and it is determined that the target user performs the valid operation on the target video. Alternatively, if the target position is the lower left corner position of the target video, but the operation position is not the lower left corner position of the target video, for example, the operation position is the lower right corner position of the target video, it is determined that the operation position does not match the target position, and it is determined that the target user does not perform the valid operation on the target video.

In another possible implementation, the target position may be a specified position in the target video (for example, a specified area with a size of M * N, where both M and N are positive integers), the specified position is not a preconfigured default position, but may change, and is a position determined by the client. For example, at a certain moment, the specified position is a position A, and at another moment, the specified position is a position B.

For example, the specified position may be an upper left corner position in the target video, or an upper right corner position in the target video, or a lower left corner position in the target video, or a lower right corner position in the target video, or a center position in the target video, or a lower midpoint position in the target video, or a right midpoint position in the target video, and the like. Certainly, the above are only examples of the specified position, which is not limited herein.

The specified position is determined by the client and may change, thus in order to enable the target user to learn the specified position in the target video, the client may further display a special mark at the specified position in the target video in an overlapped manner during a process of displaying the target video, and determine a position of the special mark as the target position, that is, the position of the special mark is the specified position in the target video, and the specified position in the target video is taken as the target position. Apparently, since the special mark is displayed at the specified position in the target video in the overlapped manner, when watching the content of the target video, the target user may notice the special mark at the specified position, and then take the position of the special mark as the target position. In this way, the target user can click the position of the special mark in the video picture by using the mouse.

Assuming that the specified position is the lower-left corner position in the target video, in the process of displaying the target video, the client may display the special mark at the lower-left corner position in the target video in the overlapped manner, that is, take the lower-left corner position in the target video as the target position. In this way, the target user may notice the special mark at the lower left corner position, and then take the lower left corner position where the special mark is located as the target position. Therefore, the target user can click the lower left corner position in the video picture by using the mouse.

On this basis, when the target user clicks a certain position in the video picture through the mouse, the client may determine the operation position of the target user, and determine whether the operation position matches the target position. If the target position is the lower left corner position in the target video and the operation position is the lower left corner position in the target video, it is determined that the operation position of the target user in the target video matches the target position, and it is determined that the target user performs the valid operation on the target video. Alternatively, if the target position is the lower left corner position of the target video, but the operation position is not the lower left corner position of the target video, for example, the operation position is the lower right corner position of the target video, it is determined that the operation position does not match the target position, and it is determined that the target user does not perform the valid operation on the target video.

For example, when the client displays the special mark at the specified position in the target video in the overlapped manner, the special mark may be a special shape, such as a circle, a triangle, a square, a trapezoid, or the like, or the special mark may be a progress bar, such as a transverse progress bar, a longitudinal progress bar, a special shape progress bar (such as a circular progress bar, a triangular progress bar, a trapezoid progress bar, or the like), or the special mark may be a special character, such as X, Y, ①, Δ, or the like. Certainly, the above are only a few examples of the special mark, and the special mark is not limited in this embodiment, as long as the target user can distinguish the target position based on the special mark.

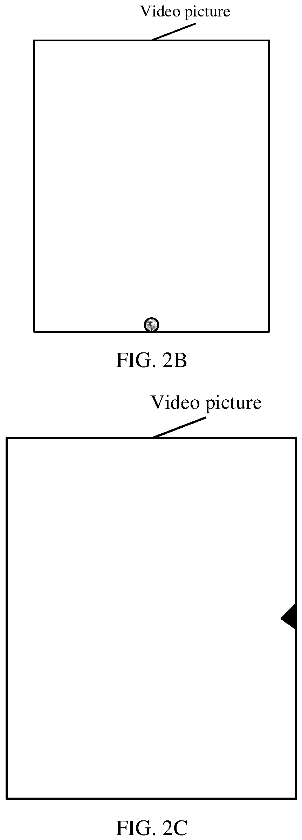

For example, the special shape is taken as an example of the special mark, referring to FIG. 2A, FIG. 2A shows an example of displaying a circle at a lower left corner position in the overlapped manner, referring to FIG. 2B, FIG. 2B shows an example of displaying a circle at a lower midpoint position in the overlapped manner, referring to FIG. 2C, FIG. 2C shows an example of displaying a triangle at a right midpoint position in the overlapped manner.

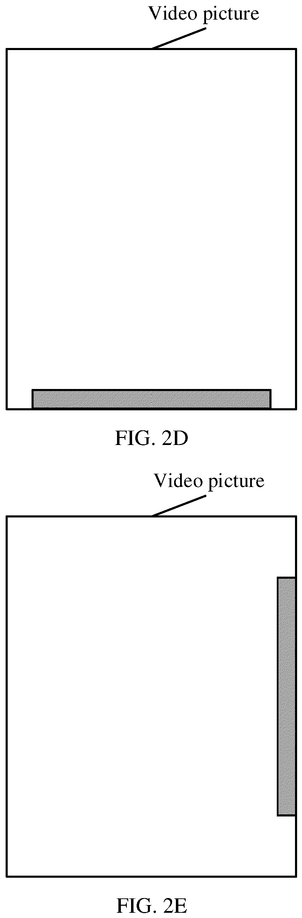

For another example, the progress bar is taken as an example of the special mark, referring to FIG. 2D, FIG. 2D shows an example of displaying a transverse progress bar at a lower midpoint position in the overlapped manner, that is, a center point of the transverse progress bar is located at the lower midpoint position. Referring to FIG. 2E, FIG. 2E shows an example of displaying a longitudinal progress bar at a right midpoint position in the overlapped manner, that is, a center point of the longitudinal progress bar is located at the right midpoint position. Certainly, in practical applications, the transverse progress bar may also be displayed at the upper midpoint position in the overlapped manner, and the longitudinal progress bar may be displayed at the left midpoint position in the overlapped manner, which is not limited herein.

For ease of description, in the embodiments of the present disclosure, it is taken as an example that the special mark is a progress bar, and in a process of displaying the target video, the client may further display a transverse progress bar at a midpoint position on a lower side of the target video in the overlapped manner, as shown in FIG. 2D, that is, a position of the transverse progress bar is the target position. The transverse progress bar is displayed at the lower midpoint position in the overlapped manner, thus the target user may view the transverse progress bar when watching the content of the target video, and then take the position of the transverse progress bar as the target position. In this way, the target user can click the transverse progress bar in the video picture by using the mouse.

In the above process, two examples of the target position are given, that is, the default position and the specified position, certainly, the above manners are only two examples of the target position, and the target position is not limited in this embodiment, as long as the target user can learn the target position and then click the target position by using the mouse.

Manner 2: If the operation information includes an operation duration, when the operation duration of the target user for the target video is greater than or equal to the preset duration, it may be determined that the target user performs the valid operation on the target video; or when the operation duration is less than the preset duration, it may be determined that the target user does not perform the valid operation on the target video.

For example, a preset duration may be pre-configured, and the preset duration may be configured based on experience, for example, 10 seconds, 20 seconds, 60 seconds, or 120 seconds, etc., which is not limited in the present disclosure, which indicates that a duration of the pressing operation performed by the target user on the target video needs to be greater than or equal to the preset duration.

For example, when the target video is opened and electronic patrol is performed on the target video, the target user clicks a position in the video picture by using the mouse, and the click operation needs to last for a period of time, for example, the target user presses a left button of the mouse for a period of time. The client may acquire a start moment at which the target user starts pressing a left mouse button, and acquire an end moment at which the target user stops pressing the left mouse button (that is, a moment at which the target user releases the left mouse button), where a duration between the end moment and the start moment is the operation duration of the target user.

As described above, when the target user clicks a position in the video picture by using the mouse, and the click operation lasts for a period of time, the client may obtain the operation duration of the target user, and determine whether the operation duration is greater than or equal to the preset duration. When the operation duration is greater than or equal to the preset duration, the client may determine that the target user performs the valid operation on the target video; or when the operation duration is less than the preset duration, the client may determine that the target user does not perform the valid operation on the target video.

Manner 3: if the operation information includes an operation position and an operation duration, when the operation position of the target user in the target video matches the target position, and the operation duration of the target user for the target video is greater than or equal to the preset duration, it may be determined that the target user performs the valid operation on the target video. Alternatively, when the operation position does not match the target position and/or the operation duration is less than the preset duration, it may be determined that the target user does not perform the valid operation on the target video.

In a possible implementation, the target position may be a default position of the target video, the default position may be a pre-configured position, and the default position does not change, for example, a lower-left corner position of the target video. Based on this, the target user can learn that the lower left corner is the default position, and when the target user clicks a certain position in the video picture by using the mouse, the target user clicks the lower left corner position by using the mouse. In addition, a preset duration may be pre-configured, and the preset duration may be configured based on experience, for example, which indicates that a duration of the pressing operation performed by the target user on the target video is greater than or equal to the preset duration.

On this basis, when the target video is opened and the electronic patrol is performed on the target video, the target user clicks the lower left corner position in the video picture by using the mouse, and the click operation needs to last for a period of time, for example, the left button of the mouse is pressed for a period of time, and the duration of the click operation is greater than or equal to the preset duration.

Further, the client may determine an operation position of the target user in the target video, and determine whether the operation position matches the target position. If the operation position does not match the target position, it may be determined that the target user does not perform the valid operation on the target video. Alternatively, if the operation position of the target user in the target video matches the target position, the client may further obtain an operation duration of the target user, and determine whether the operation duration is greater than or equal to a preset duration.

Then, when the operation duration is greater than or equal to the preset duration, the client may determine that the target user performs the valid operation on the target video; or when the operation duration is less than the preset duration, the client may determine that the target user does not perform the valid operation on the target video.

In another possible implementation, the target position may be a specified position in the target video, and the specified position is not a preconfigured default position, but a position that may change, and the position is determined by the client. In order to enable the target user to learn the specified position in the target video, in the process of displaying the target video, the client may further display a special mark at the specified position in the target video in an overlapped manner, and determine the position where the special mark is located as the target position. When watching the content of the target video, the target user may notice the special mark at the specified position, and then take the position of the special mark as the target position.

For example, assuming that the specified position is a lower-left corner position in the target video, the client may display the special mark at the lower-left corner position of the target video in the overlapped manner, and the target user may notice the special mark at the lower-left corner position, and then take the lower-left corner position where the special mark is located as the target position. Therefore, the target user can click the lower left corner position in the video picture by using the mouse.

A preset duration may be pre-configured, and the preset duration is configured based on experience, for example, which indicates that a duration of the pressing operation performed by the target user on the target video needs to be greater than or equal to the preset duration.

On this basis, when the target video is opened and electronic patrol is performed on the target video, the target user clicks the lower left corner position in the video picture by using the mouse, and this click operation needs to last for a period of time. The client may determine an operation position of the target user, and determine whether the operation position matches the target position. If the operation position does not match the target position, it is determined that the target user does not perform the valid operation on the target video. Alternatively, if the operation position of the target user in the target video matches the target position, the client may further obtain an operation duration of the target user for the target video, and determine whether the operation duration is greater than or equal to a preset duration. When the operation duration is greater than or equal to the preset duration, it is determined that the target user performs the valid operation on the target video; or when the operation duration is less than the preset duration, it is determined that the target user does not perform the valid operation on the target video.

For example, when the client displays the special mark at the specified position in the target video in the overlapped manner, the special mark may be a special shape, a progress bar, or a special character. In following description, it is taken as an example that the special mark is the progress bar, such as a transverse progress bar, a longitudinal progress bar, a special-shape progress bar, etc. Referring to FIG. 2D, FIG. 2D shows an example of displaying a transverse progress bar in the overlapped manner, and FIG. 2E shows an example of displaying a longitudinal progress bar in the overlapped manner.

In a possible implementation, during an operation process of the target user on the target video, duration information may further be displayed on the target video, where the duration information indicates an operation duration of the target user for the target video. For example, when the client displays the progress bar at the specified position in the target video in the overlapped manner, during the pressing operation of the target user on the target video, a value of the progress bar may be updated, so as to display the operation duration of the target user for the target video through the progress bar. For another example, when the client displays the special mark at the specified position in the target video in the overlapped manner, during the pressing operation of the target user on the target video, the operation duration (that is, the duration) of the target user on the target video may also be displayed by darkening the mark. Certainly, the above manners are merely examples, which is not limited thereto, as long as the duration information for the special mark can be displayed on the target video, so that the user can learn the duration information.

Further, after the operation performed by the target user on the target video is finished, display of the duration information on the target video may be stopped, that is, the operation duration on the target video is no longer accumulated. When the operation duration corresponding to the duration information is less than a preset duration, the operation duration on the target video is cleared, and the duration information is redisplayed on the target video when the operation of the target user on the target video is restarted.

For example, when the client displays the progress bar (such as a transverse progress bar or a longitudinal progress bar) at the specified position in the target video in the overlapped manner, during the pressing operation of the target user on the target video, a value of the progress bar may be updated, so as to display the operation duration of the target user for the target video through the progress bar.

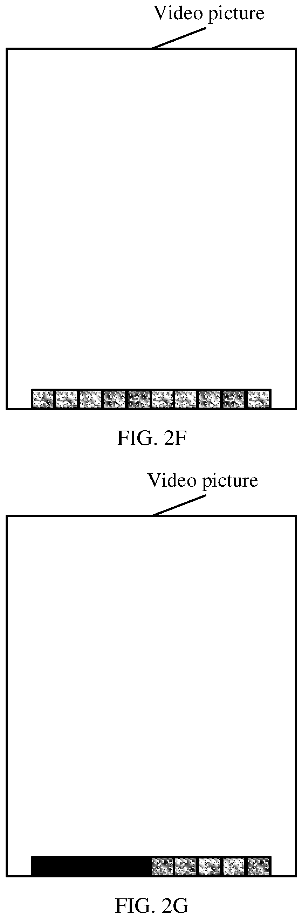

For example, the progress bar is divided into K values based on a preset duration, for example, when the preset duration is 10 seconds, the progress bar is equally divided into 10 values, and when the preset duration is 20 seconds, the progress bar is equally divided into 20 values, and so on. For ease of description, it is taken as an example that the progress bar is equally divided into 10 values, as shown in FIG. 2F.

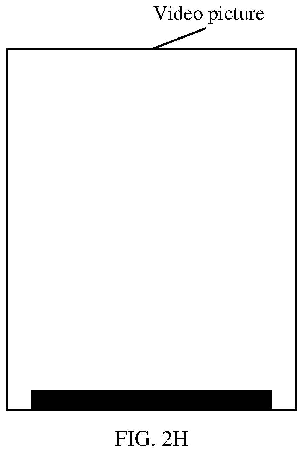

On this basis, during the pressing operation of the target user on the target video, the client may count the operation duration of the target user for the target video in real time, and when the operation duration is 1 second, update the value of the progress bar to 1, when the operation duration is 2 seconds, update the value of the progress bar to 2, and so on. Apparently, the target user can learn the operation duration on the target video by viewing the progress bar, referring to FIG. 2G, the target user learns that the operation duration is 5 seconds, referring to FIG. 2H, the target user learns that the operation duration is 10 seconds. When the operation duration reaches the preset duration of 10 seconds, the target user can release the left mouse button.

In a possible implementation, the electronic patrol task on the target video may be carried out only once, or the electronic patrol task on the target video may be carried out for multiple times, and each time of carrying out the electronic patrol task, steps 101-103 can be adopted to determine whether the electronic patrol task is completed.

For example, the electronic patrol plan may include a patrol time period (one or more patrol time periods) corresponding to the target video, indicating to perform the electronic patrol on the video corresponding to the patrol time period, and therefore the client performs the electronic patrol method in the patrol time period. In some embodiments, a duration of each patrol time period is, for example, 2 minutes, for a target video with a total duration of 10 minutes, the target video may be divided into 5 patrol time periods, and the target position and the preset duration may change in each patrol time period.

For example, in the target video, in a first patrol time period: 0-2 minutes, the target position is at a lower left corner position in the target video, and the preset duration is 5s; in a second patrol time period: 2-4 minutes, the target position is at a bottom middle position in the target video, and the preset duration is 10s; in a third patrol time period: 4-6 minutes, the target position is at a left middle position in the target video, and the preset duration is 13s; in a fourth patrol time period: 6-8 minutes, the target position is at a lower right corner position in the target video, and the preset duration is 8s; in a fifth patrol time period: 8 to 10 minutes, the target position is at a left middle position in the target video, and the preset duration is 20s. Only when the target user completes the patrol task in every patrol time period, the patrol of the target video can be considered as completed, and if the target user does not complete the patrol task in any one of the patrol time periods, it is determined that the target user does not complete the electronic patrol task on the target video.

In some embodiments, each of the patrol time periods has a same or different duration, and for each of the patrol time periods, when an operation position of the target user in a video corresponding to the patrol time period in the target video matches a target position corresponding to the patrol time period, and an operation duration of the target user for the video corresponding to the patrol time period in the target video is greater than or equal to a preset duration corresponding to the patrol time period, it is determined that the target user performs a valid operation on the video corresponding to the patrol time period in the target video; when an operation position of the target user in a video corresponding to the patrol time period in the target video does not match a target position corresponding to the patrol time period, and/or an operation duration of the target user for the video corresponding to the patrol time period in the target video is less than a preset duration corresponding to the patrol time period, it is determined that the target user does not perform a valid operation on the video corresponding to the patrol time period in the target video; where each of the patrol time periods corresponds to a different target position, and each of the patrol time periods corresponds to a different preset duration.

In some embodiments, each of the patrol time periods has a same or different duration, and for each of the patrol time periods: when an operation position of the target user in a video corresponding to the patrol time period in the target video matches a target position corresponding to the patrol time period, it is determined that the target user performs a valid operation on the video corresponding to the patrol time period in the target video; when an operation position of the target user in a video corresponding to the patrol time period in the target video does not match a target position corresponding to the patrol time period, it is determined that the target user does not perform a valid operation on the video corresponding to the patrol time period in the target video; where each of the patrol time periods corresponds to a different target position.

In some embodiments, each of the patrol time periods has a same or different duration, and for each of the patrol time periods: when an operation duration of the target user for the video corresponding to the patrol time period in the target video is greater than or equal to a preset duration corresponding to the patrol time period, it is determined that the target user performs a valid operation on the video corresponding to the patrol time period in the target video; when an operation duration of the target user for the video corresponding to the patrol time period in the target video is less than a preset duration corresponding to the patrol time period, it is determined that the target user does not perform a valid operation on the video corresponding to the patrol time period in the target video; where each of the patrol time periods corresponds to a different preset duration.

In some other embodiments, if a duration of the target video is less than a duration of the patrol time period, as long as the target user completes the patrol task on the target video once, it is considered that the target user completes the patrol of the target video. If a duration of the target video is greater than a duration of the patrol period, the target video is divided into one or more patrol time periods, and the target user is required to complete the patrol task in every patrol time period to complete the patrol of the target video, which will not be described herein.

It can be seen from the above technical solution that, in the embodiments of the present disclosure, whether the target user has completed an electronic patrol task on the target video is determined by detecting whether the target user performs a valid operation on the target video, so that the target user is motivated to watch the content of the target video, that is, it is ensured that the target user watches the video content, and when an abnormal event occurs, the target user can find out the abnormal event in time, so that the abnormal event is handled in time.

The above technical solutions in the embodiments of the present disclosure are described below with reference to specific application scenarios.

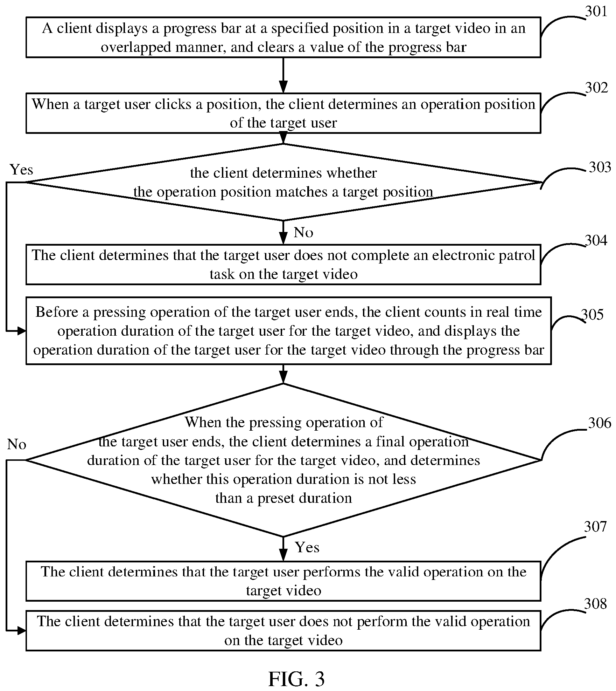

Referring to FIG. 3, FIG. 3 is a schematic flowchart of an electronic patrol method, the method may include: step 301, when electronic patrol needs to be performed on a target video, the target video is opened, and the client displays a progress bar at a specified position in the target video in an overlapped manner, and clears a value of the progress bar.

Step 302: when the target user clicks a position, the client determines an operation position of the target user.

Step 303: the client determines whether the operation position matches a target position.

If not, step 304 may be performed, and if yes, step 305 may be performed.

For example, the target position may be a position of the progress bar, therefore, when the operation position of the target user in the target video matches the position of the progress bar, it is determined that the operation position matches the target position, and if the operation position of the target user in the target video does not match the position of the progress bar, it is determined that the operation position does not match the target position.

Step 304: the client determines that the target user does not complete the electronic patrol task on the target video.

Step 305: before the pressing operation of the target user ends, the client counts in real time operation duration of the target user for the target video, and displays the operation duration of the target user for the target video through the progress bar.

For example, when the operation duration is 1 second, a value of the progress bar is updated to 1, when the operation duration is 2 seconds, the value of the progress bar is updated to 2, and so on, so that the target user learns the operation duration.

Step 306: when the pressing operation of the target user ends, the client determines a final operation duration of the target user for the target video, and determines whether this operation duration is greater than or equal to a preset duration.

If so, that is, when the operation duration is greater than or equal to the preset duration, step 307 may be performed.

If not, that is, when the operation duration is less than the preset duration, step 308 may be performed.

Step 307: the client determines that the target user performs the valid operation on the target video.

Step 308: The client determines that the target user does not perform the valid operation on the target video.

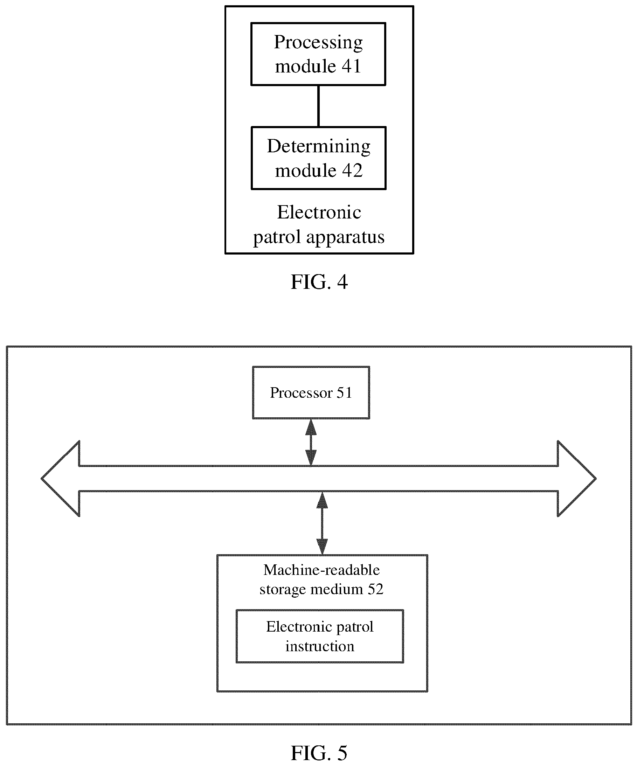

Based on a same application concept as the above method, embodiments of the present disclosure provide an electronic patrol apparatus, as shown in FIG. 4, FIG. 4 is a schematic structural diagram of the electronic patrol apparatus, and the apparatus may include: a processing module 41, configured to determine whether a target user performs a valid operation on a target video; a determining module 42, configured to determine that the target user completes an electronic patrol task on the target video in response to determining that the target user performs a valid operation on the target video; determine that the target user does not complete the electronic patrol task on the target video in response to determining that the target user does not perform the valid operation on the target video.

For example, the processing module 41 is further configured to: acquire operation information of the target user on the target video; and when the operation information matches configured valid operation data, determine that the target user performs the valid operation on the target video; or when the operation information does not match the configured valid operation data, determine that the target user does not perform the valid operation on the target video.

For example, the processing module 41 is further configured to: acquire operation information of the target user on the target video; and determine, based on the operation information, whether the target user performs the valid operation on the target video.

For example, the valid operation includes a valid pressing operation, and the operation information includes a pressing position and/or a pressing duration.

For example, the processing module 41 is configured to: when an operation position of the target user in the target video matches a target position, determine that the target user performs the valid operation on the target video; or, when the operation position does not match the target position, determine that the target user does not perform the valid operation on the target video; or when an operation duration of the target user for the target video is greater than or equal to a preset duration, determine that the target user performs the valid operation on the target video; and when the operation duration is less than the preset duration, determine that the target user does not perform the valid operation on the target video; or when an operation position of the target user in the target video matches a target position, and an operation duration of the target user for the target video is greater than or equal to a preset duration, determine that the target user performs the valid operation on the target video; and when the operation position does not match the target position and/or the operation duration is less than the preset duration, determine that the target user does not perform the valid operation on the target video.

For example, the processing module 41 is further configured to: display a special mark in a specified position in the target video in an overlapped manner, and determine a position of the special mark as the target position.

For example, the special mark may include a progress bar, and certainly the progress bar is only an example; where the progress bar is a transverse progress bar, or the progress bar is a longitudinal progress bar, or the progress bar is a progress bar with a special shape.

For example, the processing module 41 is further configured to: display duration information on the target video during an operation process of the target user on the target video, where the duration information represents an operation duration of the target user for the target video; stopping displaying the duration information on the target video after the operation of the target user on the target video ends; when the operation duration corresponding to the duration information is less than a preset duration, clear the operation duration on the target video, and redisplay the duration information on the target video when the operation of the target user on the target video is restarted. For example, during the pressing operation of the target user on the target video, a value of the progress bar is updated to display the operation duration of the target user for the target video through the progress bar, so that the target user can learn the operation duration.

For example, the target video is an online real-time video or an offline downloaded video.

Based on a same application concept as the above method, embodiments of the present disclosure further provide an electronic patrol device (such as the client in the above embodiment), and as shown in FIG. 5, the electronic patrol device includes: a processor 51 and a machine-readable storage medium 52, where the machine-readable storage medium 52 stores a machine-executable instruction executable by the processor 51; and the processor 51 is configured to execute the machine-executable instruction to implement the electronic patrol method disclosed in the above examples of the present disclosure. For example, following steps are implemented: determining whether a target user performs a valid operation on a target video; if so, determining that the target user completes an electronic patrol task on the target video; if not, determining that the target user does not complete the electronic patrol task on the target video.

Based on a same application concept as the above method, embodiments of the present disclosure further provide a machine-readable storage medium, where the machine-readable storage medium stores computer instructions, and when the computer instructions are executed by a processor, the electronic patrol method disclosed in the above examples of the present disclosure can be implemented.

The machine-readable storage medium may be any electronic, magnetic, optical, or other physical storage device, and may include or store information, such as executable instructions, data, or the like. For example, the machine-readable storage medium may be a random access memory (RAM), a volatile memory, a non-volatile memory, a flash memory, a storage drive (such as a hard disk drive), a solid state drive, any type of storage disk (such as an optical disk or a DVD), or a similar storage medium, or a combination thereof.

The system, apparatus, module or unit illustrated in the above embodiments may be specifically implemented by a computer chip or an entity, or implemented by a product having a certain function. A typical implementation device is a computer, and a specific form of the computer may be a personal computer, a laptop computer, a cellular phone, a camera phone, a smartphone, a personal digital assistant, a media player, a navigation device, an email transceiver device, a game console, a tablet computer, a wearable device, or a combination of any one of these devices.

For ease of description, the above apparatus is described by dividing functions into various units. Certainly, functions of the units may be implemented in one or more pieces of software and/or hardware when implementing the present disclosure.

Those skilled in the art should understand that the embodiments of the present disclosure may be provided as a method, a system, or a computer program product. Thus, the present disclosure may take the form of an entirely hardware embodiment, an entirely software embodiment, or an embodiment combining software and hardware aspects. Moreover, the embodiments of the present application may take the form of a computer program product implemented on one or more computer usable storage media (including but not limited to magnetic disk storage, CD-ROM, optical storage, etc. ) including a computer-usable program code.

The present disclosure is described with reference to flowchart diagrams and/or block diagrams of methods, devices (systems), and computer program products according to embodiments of the present disclosure. It should be understood that each process and/or block in the flowchart and/or block diagram, and a combination of processes and/or blocks in the flowchart and/or block diagram may be implemented by using computer program instructions. These computer program instructions may be provided to a processor of a general purpose computer, a special purpose computer, an embedded processor or other programmable data processing apparatus to generate a machine, so that the instructions executed by the processor of the computer or other programmable data processing apparatus generate an apparatus for implementing functions specified in one or more processes in the flowchart and/or one or more blocks in the block diagram.

Moreover, these computer program instructions may also be stored in a computer-readable memory that can direct a computer or other programmable data processing apparatus to work in a specific manner, so that the instructions stored in the computer-readable memory generate an article of manufacture including an instruction apparatus, and the instruction apparatus implements functions specified in one or more processes in the flowchart and/or one or more blocks in the block diagram.

These computer program instructions may also be loaded onto a computer or other programmable data processing apparatus, so that a series of operation steps are performed on the computer or other programmable apparatus to generate a computer-implemented process, so that the instructions executed on the computer or other programmable apparatus provide steps for implementing functions specified in one or more processes in the flowchart and/or one or more blocks in the block diagram.

The above is merely embodiments of the present disclosure, and is not intended to limit the present disclosure. For those skilled in the art, the present disclosure may have various modifications and variations. Any modifications, equivalent substitutions, improvements, etc., made within the spirit and principle of the present disclosure shall fall within the scope of the claims of the present disclosure.

## Claims

1. An electronic patrol method, comprising:
determining whether a target user performs a valid operation on a target video;
in response to determining that the target user performs the valid operation on the target video, determining that the target user completes an electronic patrol task on the target video; and
in response to determining that the target user does not perform the valid operation on the target video, determining that the target user does not complete the electronic patrol task on the target video.

2. The method according to claim 1, wherein
determining whether the target user performs the valid operation on the target video comprises:
acquiring operation information of the target user on the target video; and
determining, based on the operation information, whether the target user performs the valid operation on the target video, wherein the valid operation comprises a valid pressing operation, and the operation information comprises a pressing position or a pressing duration or both.

3. The method according to claim 1, wherein
determining whether the target user performs the valid operation on the target video comprises:
when an operation position of the target user in the target video matches a target position, determining that the target user performs the valid operation on the target video; or, when the operation position does not match the target position, determining that the target user does not perform the valid operation on the target video; or
when an operation duration of the target user for the target video is greater than or equal to a preset duration, determining that the target user performs the valid operation on the target video; and when the operation duration is less than the preset duration, determining that the target user does not perform the valid operation on the target video; or
when an operation position of the target user in the target video matches a target position, and an operation duration of the target user for the target video is greater than or equal to a preset duration, determining that the target user performs the valid operation on the target video; and when the operation position does not match the target position and/or the operation duration is less than the preset duration, determining that the target user does not perform the valid operation on the target video.

4. The method according to claim 3, wherein
determining the target position comprises: displaying a special mark in a specified position in the target video in an overlapped manner, and determining a position of the special mark as the target position.

5. The method according to claim 4, wherein
the special mark comprises a progress bar, wherein the progress bar is a transverse progress bar, or the progress bar is a longitudinal progress bar, or the progress bar is a progress bar with a special shape.

6. The method according to claim 4, further comprising:
displaying duration information on the target video during an operation process of the target user on the target video, wherein the duration information represents an operation duration of the target user for the target video;
stopping displaying the duration information on the target video after the operation of the target user on the target video ends;
when the operation duration corresponding to the duration information is less than a preset duration, clearing the operation duration on the target video, and redisplaying duration information on the target video when the operation of the target user on the target video is restarted.

7. The method according to claim 1, further comprising:
the target video corresponds to patrol time periods,
determining whether the target user performs a valid operation for each of the patrol time periods;
determining that the target user completes the electronic patrol task on the target video in response to determining that the target user performs the valid operation for each of the patrol time periods.

8. The method according to claim 7, wherein
determining that the target user does not complete the electronic patrol task on the target video in response to determining that the target user does not perform the valid operation for any one of the patrol time periods.

9. The method according to claim 7, wherein each of the patrol time periods has a different duration, and for each of the patrol time periods,
when an operation position of the target user in a video corresponding to the patrol time period in the target video matches a target position corresponding to the patrol time period, and an operation duration of the target user for the video corresponding to the patrol time period in the target video is greater than or equal to a preset duration corresponding to the patrol time period, determining that the target user performs a valid operation on the video corresponding to the patrol time period in the target video;
when an operation position of the target user in a video corresponding to the patrol time period in the target video does not match a target position corresponding to the patrol time period, and/or an operation duration of the target user for the video corresponding to the patrol time period in the target video is less than a preset duration corresponding to the patrol time period, determining that the target user does not perform a valid operation on the video corresponding to the patrol time period in the target video;
wherein each of the patrol time periods corresponds to a different target position, and each of the patrol time periods corresponds to a different preset duration.

10. The method according to claim 7, wherein each of the patrol time periods has a different duration, and for each of the patrol time periods,
when an operation position of the target user in a video corresponding to the patrol time period in the target video matches a target position corresponding to the patrol time period, determining that the target user performs a valid operation on the video corresponding to the patrol time period in the target video;
when an operation position of the target user in a video corresponding to the patrol time period in the target video does not match a target position corresponding to the patrol time period, determining that the target user does not perform a valid operation on the video corresponding to the patrol time period in the target video;
wherein each of the patrol time periods corresponds to a different target position.

11. The method according to claim 7, wherein each of the patrol time periods has a different duration, and for each of the patrol time periods,
when an operation duration of the target user for the video corresponding to the patrol time period in the target video is greater than or equal to a preset duration corresponding to the patrol time period, determining that the target user performs a valid operation on the video corresponding to the patrol time period in the target video;
when an operation duration of the target user for the video corresponding to the patrol time period in the target video is less than a preset duration corresponding to the patrol time period, determining that the target user does not perform a valid operation on the video corresponding to the patrol time period in the target video;
wherein each of the patrol time periods corresponds to a different preset duration.

12. An electronic patrol apparatus, comprising:
a processing module, configured to determine whether a target user performs a valid operation on a target video; and
a determining module, configured to determine that the target user completes an electronic patrol task on the target video in response to determining that the target user performs the valid operation on the target video; and determine that the target user does not complete the electronic patrol task on the target video in response to determining that the target user does not perform the valid operation on the target video.

13. The apparatus according to claim 12, wherein the processing module is configured to: acquire operation information of the target user on the target video; and determine, based on the operation information, whether the target user performs the valid operation on the target video, wherein the valid operation comprises a valid pressing operation, and the operation information comprises a pressing position or a pressing duration or both;
the processing module is configured to: when an operation position of the target user in the target video matches a target position, determine that the target user performs the valid operation on the target video; or, when the operation position does not match the target position, determine that the target user does not perform the valid operation on the target video; or when an operation duration of the target user for the target video is greater than or equal to a preset duration, determine that the target user performs the valid operation on the target video; and when the operation duration is less than the preset duration, determine that the target user does not perform the valid operation on the target video; or when an operation position of the target user in the target video matches a target position, and an operation duration of the target user for the target video is greater than or equal to a preset duration, determine that the target user performs the valid operation on the target video; and when the operation position does not match the target position and/or the operation duration is less than the preset duration, determine that the target user does not perform the valid operation on the target video;
the processing module is configured to: display a special mark in a specified position in the target video in an overlapped manner, and determine a position of the special mark as the target position;
wherein the special mark comprises a progress bar, wherein the progress bar is a transverse progress bar, or the progress bar is a longitudinal progress bar, or the progress bar is a progress bar with a special shape;
the processing module is further configured to: display duration information on the target video during an operation process of the target user on the target video, wherein the duration information represents an operation duration of the target user for the target video; stopping displaying the duration information on the target video after the operation of the target user on the target video ends; when the operation duration corresponding to the duration information is less than a preset duration, clear the operation duration on the target video, and redisplay the duration information on the target video when the operation of the target user on the target video is restarted;
wherein each of the patrol time periods has a different duration, and for each of the patrol time periods, the processing module is further configured to: when an operation position of the target user in a video corresponding to the patrol time period in the target video matches a target position corresponding to the patrol time period, and an operation duration of the target user for the video corresponding to the patrol time period in the target video is greater than or equal to a preset duration corresponding to the patrol time period, determine that the target user performs a valid operation on the video corresponding to the patrol time period in the target video; when an operation position of the target user in a video corresponding to the patrol time period in the target video does not match a target position corresponding to the patrol time period, and/or an operation duration of the target user for the video corresponding to the patrol time period in the target video is less than a preset duration corresponding to the patrol time period, determine that the target user does not perform a valid operation on the video corresponding to the patrol time period in the target video; wherein each of the patrol time periods corresponds to a different target position, and each of the patrol time periods corresponds to a different preset duration;
wherein each of the patrol time periods has a different duration, and for each of the patrol time periods, the processing module is further configured to: when an operation position of the target user in a video corresponding to the patrol time period in the target video matches a target position corresponding to the patrol time period, determine that the target user performs a valid operation on the video corresponding to the patrol time period in the target video; when an operation position of the target user in a video corresponding to the patrol time period in the target video does not match a target position corresponding to the patrol time period, determine that the target user does not perform a valid operation on the video corresponding to the patrol time period in the target video; wherein each of the patrol time periods corresponds to a different target position;
wherein each of the patrol time periods has a different duration, and for each of the patrol time periods, the processing module is further configured to: when an operation duration of the target user for the video corresponding to the patrol time period in the target video is greater than or equal to a preset duration corresponding to the patrol time period, determine that the target user performs a valid operation on the video corresponding to the patrol time period in the target video; when an operation duration of the target user for the video corresponding to the patrol time period in the target video is less than a preset duration corresponding to the patrol time period, determine that the target user does not perform a valid operation on the video corresponding to the patrol time period in the target video; wherein each of the patrol time periods corresponds to a different preset duration.

14. An electronic patrol device, comprising: a processor and a machine-readable storage medium, wherein the machine-readable storage medium stores a machine-executable instruction executable by the processor; the processor is configured to execute the machine-executable instruction to implement the method according to any one of claims 1-11.

15. A machine-readable storage medium storing a machine-executable instruction executable by a processor, wherein the processor is configured to execute the machine-executable instruction to implement the method according to any one of claims 1-11.

16. A computer program, stored in a machine-readable storage medium, when the computer program is executed by a processor, the processor is caused to implement the method according to any one of claims 1-11.
